# EUROPEAN PATENT SPECIFICATION

(11) **EP 1 895 225 B1**
(45) Date of publication and mention of the grant of the patent: **23.12.2009**
(21) Application number: 07075734.9
(22) Date of filing: 28.08.2007
(51) Int. Cl.: F16M 11/10

(54) **Device comprising a holder, a guide located within said holder and an element which is movable with respect to said guide**
Vorrichtung mit Halter, Führung in diesem Halter und Element, das in der Führung bewegt werden kann
Dispositif comprenant un support, un guide placé dans ledit support et un élément qui est mobile par rapport audit guide

(30) Priority: 31.08.2006 NL 1032397
(43) Date of publication of application: 05.03.2008
(73) Proprietor: Vogel's Holding B.V., 5628 DB Eindhoven (NL)
(72) Inventor: Grolle, Paul Robbert, 5708 AB Helmond (NL); Hermsen, Erwin Jacobus Christian Leonardus, 5961 CX Horst (NL)
(74) Representative: Dorna, Peter

(56) References cited:
- EP-A- 1 471 300
- US-A1- 3 211 406
- US-A1- 3 650 503
- US-A1- 5 477 747
- US-A1- 2005 263 659

## Description

The invention relates to a device comprising a holder, a guide located within said holder and an element which is movable relative to said guide, which guide comprises two parts positioned opposite each other in said holder and a recess bounded by said parts, in which the movable element is accommodated, being movable in a direction of movement therein.

Such a device is known, for example from European patent application EP-A2-1 471 300 of the present applicant.

The elongated plate-shaped element abuts against a wall of the recess under the influence of the force of gravity on one side, and on another side said element abuts against another wall of the recess. Frictional forces thus occur, which forces oppose movement of the elongated plate-shaped element. Only when a force that overcomes said frictional forces is exerted on the elongated plate-shaped element can the elongated plate-shaped element be moved relative to the guide. It is a disadvantage of the known device that if the frictional forces are too small, this may lead to undesirable movement of the element. It is not possible for a user to adjust the magnitude of the frictional forces that occur.

The object of the invention is to provide a device in which the magnitude of the frictional forces occurring between the element and the parts can be adjusted in a simple manner.

This object is accomplished with the device according to the invention in that said parts are movable with respect to each other, at least at the location of the recess, in a clamping direction transversely to the direction of movement, which clamping direction extends substantially parallel to the main surface of the elongated plate-shaped element, whilst the device comprises at least one tapered element, which abuts against at least one of said parts, which tapered element is movable in a direction transversely to the clamping direction for moving said parts with respect to each other.

As a result of the parts being moved towards each other in the clamping direction, walls of the recess are pressed against side edges extending transversely to the main surface of the elongated plate-shaped element. This results in the parts exerting forces on the elongated plate-shaped element, which forces need to be overcome when moving the elongated plate-shaped element with respect to the guide. The harder the walls of the recess are pressed against the side edges of the elongated plate-shaped element, the larger the forces exerted on the elongated plate-shaped element will be. This makes it possible in a simple manner to adjust the desired frictional forces occurring between the elongated plate-shaped element and the guide.

When the tapered element is moved in the direction transversely to the clamping direction, the tapered element exerts a force on the part abutting against said tapered element, which force extends transversely to the direction in which the tapered element is being moved. Said force causes said part to move with respect to the other part.

One embodiment of the device according to the invention is characterised in that one part is provided with a passage, in which the tapered element is at least partially accommodated, which passage is partially bounded by a flange that is pivotable about a pivot axis.

Upon movement of the tapered element, the flange is pivoted about the pivot axis and moved away from said part. Said relative movement makes it possible to realise a movement of one part with respect to the other part.

Yet another embodiment of the device according to the invention is characterised in that the flange abuts against an inner side of the holder on a side remote from the passage.

The flange will be pivoted about the pivot axis relative to the part connected thereto upon movement of the tapered element. Since the flange abuts against the inner side of the holder, said part will be moved away from said inner side, towards the other part, as a result of said pivoting movement. In this way a movement of the parts with respect to each other is realised in a relatively simple manner.

Yet another embodiment of the device according to the invention is characterised in that said parts bound a passage, in which the tapered element is at least partially accommodated.

Moving the tapered element in the passage will cause the parts to be moved away from each other at the location of the tapered element, with the parts being pressed against the holder. Since the passage is spaced from the recess, movement of the tapered element at the location of the passage will cause the parts to move towards each other at the location of the recess.

Another embodiment of the device according to the invention is characterised in that an element abutting against at least one part is provided on a side of the passage remote from the tapered element, which element is connected to the tapered element via a rod provided with screw thread.

Said screw thread makes it possible to move the tapered element and the element abutting against at least one part on the other side of the passage to move towards or away from each other in a simple manner, as a result of which said parts are subsequently moved with respect to each other.

Due to the connected elements, it is ensured in a simple manner that the forces exerted on the parts, and consequently the forces exerted on the elongated plate-shaped elements by said parts, will be maintained.

The invention will now be explained in more detail with reference to the drawings, in which:
Figure 1 is a perspective, exploded view of a first embodiment of a device according to the invention;
Figure 2 is a perspective view of the device shown in figure 1;
Figure 3 is a perspective exploded view of a second embodiment of a device according to the invention;
Figure 4 is a perspective top plan view of the device shown in figure 3; en
Figure 5 is a perspective bottom plan view of the device shown in figure 3.

Like parts are indicated by the same numerals in the figures.

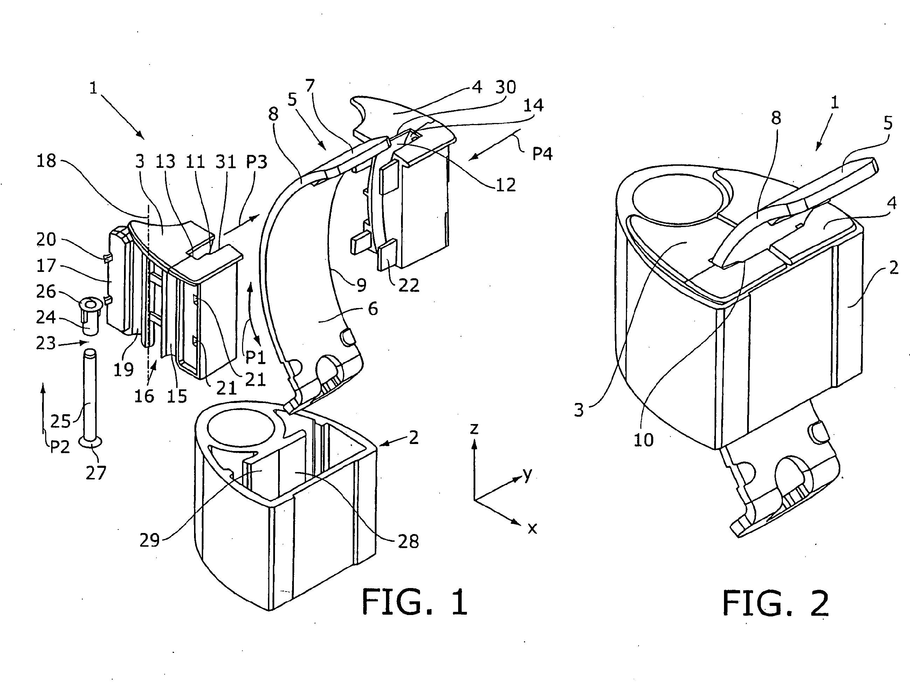

Figures 1 and 2 are respective views of a first embodiment of a device 1 according to the invention, comprising a holder 2, two parts 3, 4 positioned opposite each other within the holder 2, and an elongated plate-shaped element 5 which is movably supported in said parts 3, 4. The plate-shaped element 5 comprises two main surfaces 6, 7 extending parallel to each other and side edges 8, 9 extending transversely to said main surfaces 6, 7. The elongated plate-shaped element 5 is arcuate in shape and accommodated in a recess 10 corresponding to the arcuate shape of the elongated plate-shaped element 5. The recess 10 is made up of two notches 11, 12 in the first part 3 and the second part 4. The notches 11, 12 are bounded inter alia by the walls 13, 14 positioned opposite the side edges 8, 9 of the elongated plate-shaped element 5.

On a side remote from the notch 11 the first part 3 is provided with a first portion 15 extending in the Z-direction of a passage 16. The first part 3 is further provided with a flange 17, which is pivotable about a pivot axis 18 extending parallel to the Z-axis. The flange 17 is provided with a second portion 19 of the passage 16. On a side remote from the pivot axis 18 the flange 17 is provided with two fixing clamps 20, which can be positioned in engagement openings 21 located on a side of the portion 15 of the passage 16 remote from the pivot axis 18. The first part 3 is further provided with recesses (not shown), in which projections 22 present on the second part 4 can be positioned, so that the parts 3, 4 can be connected in a simple manner. The projections 22 lie free in the recesses in the first part 3, so that the parts 3, 4 are freely movable in the Y-direction with respect to each other.

The device 1 further comprises a clamping element 23, which comprises two rods 24, 25 interconnected by means of screw thread, which rods 24, 25 are provided on the sides remote from each other with elements 26, 27 that taper off towards the rods 24, 25. The diameter of the rods 24, 25 is smaller than the diameter of the passage 16. The largest diameter of the tapered elements 26, 27 is larger than the diameter of the passage 16. The rods 24, 25 of the clamping element 23 are positioned in the passage 16, whilst the tapered elements 26, 27 are at least partially positioned outside the passage 16. The rod 24 is provided with two projections, which are in engagement with slots in the passage 16, thus securing the rod 24 against rotation. After the clamping element 23 has been positioned in the passage 16, the flange 17 is pivoted about the pivot axis 18 until the fixing clamps 20 are positioned in the engagement openings 21. The flange 17 is now connected to the first part 3 in such a manner that the clamping element 23 cannot fall out of the first part but that the flange 17 can still make a small pivoting movement about the pivot axis 18 with respect to the first part 3.

The parts 3, 4 and also the elongated plate-shaped element 5 supported by the parts 3, 4 are positioned in a passage 28 of the holder 2, with the flange 17 being positioned opposite an inner wall 29 of the holder 2.

The operation of the device 1 is as follows. The elongated plate-shaped, arcuate element 5 is pivotable in the directions indicated by the arrow P1 about a pivot axis (not shown) extending parallel to be Y-axis. A so-called flat screen may be connected to the arcuate element 5, for example, in a manner as described in the aforesaid European patent application EP-A2-1 471 300, whilst the holder 2 is connected to a support in a manner described in said European patent application. The plate-shaped elongated element 5 abuts against a bottom side of the recess 10 with a main surface 7, whilst the main surface 6 abuts against an upper side of the recess 10. The frictional forces that occur are to keep the plate-shaped element 5 in the position adjusted by a user. Only when a user wishes to move the elongated plate-shaped element 5 and the flat screen connected thereto in the direction indicated by the arrow P1, or in the opposite direction, will the elongated plate-shaped element 5 be moved in the recess 10. If the forces occurring between the main surfaces 6, 7 and the walls 30, 31 are insufficient for keeping the elongated plate-shaped element 5 in a position adjusted by a user, the rods 25, 24 are screwed together, for example by means of a screwdriver, thereby moving the tapered element 27 in the direction indicated by the arrow P2 towards the tapered element 26. Said movement results in a force being exerted on the flange 17, as a result of which the flange is pivoted about the pivot axis 18 in a direction away from the first part 3 and the flange 17 is pressed against the inner wall 29 of the holder 2. When the tapered elements 26, 27 are moved further towards each other, the first part 3 will pivot about the pivot axis 18 with respect to the flange 17 and be moved in the clamping direction indicated by the arrow P3 towards the second part 4 at the location of the notch 11. As a result of said movement the walls 13, 14 of the notches 11, 12 will come to abut against the side edges 8, 9, and the parts 3, 4 will exert forces on the elongated plate-shaped element 5 in the clamping direction indicated by the arrow P3 and the arrow P4. Said forces oppose pivoting movement of the elongated plate-shaped element 5 in the direction indicated by the arrow P1. The tapered elements 26, 27 can be moved towards each other until the required forces are exerted on the elongated plate-shaped element 5, on the one hand preventing undesirable movement of the elongated plate-shaped element 5 and on the other hand keeping the force required for desired movement thereof within comparatively limited bounds.

If the parts 3, 4 and the elongated plate-shaped element 5 exhibit some degree of wear after some time, as a result of which the forces between the main surfaces 6, 7 and the edges 30, 31 will decrease, an additional clamping force can be exerted on the elongated plate-shaped element 5 in a simple manner by moving the tapered elements 26, 27 further together.

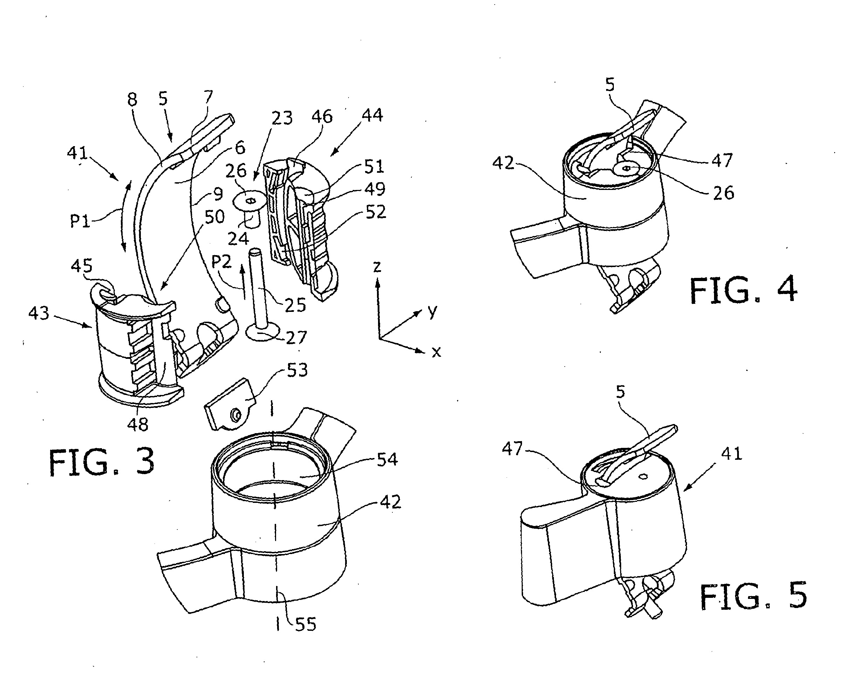

Figures 3-5 show a second embodiment of a device 41 according to the invention, comprising a holder 42, two parts 43 positioned within the holder 42 and an elongated plate-shaped element 5 supported by said parts 43, 44. The parts 43, 44 are provided with notches 45, 46 forming a recess 47. The parts 43, 44 are provided with semi-cylindrical passages 48, 49, respectively, extending in the Z-direction, which jointly form a passage 50. The passages 48, 49 are provided with conically diverging chambers 51 near both ends. Like the device 1, the device 41 is provided with a clamping element 23. The rods 24, 25 of the clamping element 23 are positioned in the passage 50, whilst the tapered elements 26, 27 are positioned in the chambers 51. On a side of the recess 47 remote from the passage 50 the parts 43, 44 are each provided with a notch 52, in which a plate-shaped element 53 is positioned. The parts 43, 44 are prevented from moving in the X-direction with respect to each other by the element 53 in a simple manner. If desired, the element 53 may be pressed against the plate-shaped, arcuate element 53, for example by means of a screw, thereby completely securing the element 53 against movement.

The operation of the device 41 is as follows. If the forces occurring between the main surfaces 6, 7 and the walls of the recess 47 are insufficient for keeping the elongated plate-shaped element 5 in the desired position, the tapered elements 26, 27 are moved towards each other in the direction indicated by the arrow P2, as a result of which the parts 43, 44 are moved away from each other at the location of the passages 48, 49 and are pressed against an inner wall 54 of the holder 52, 40. Since the passage 50 is spaced from the central axis 55 of the holder 42, the parts 43, 44 will be moved towards each other on a side remote from the passages 48, 49 when the tapered elements 26, 27 are further moved together, as a result of which walls of the notches 45, 46 will be pressed against side edges 8, 9 of the elongated plate-shaped element 5. In this way the force required for moving the elongated plate-shaped element 5 in the direction indicated by the arrow P1 has been increased.

## Claims

1. A device (1) comprising a holder (2), a guide located within said holder (2) and an element (5) which is movable relative to said guide, which guide comprises two parts (3, 4) positioned opposite each other in said holder (2) and a recess (10) bounded by said parts, in which the movable element is accommodated, being movable in a direction of movement therein, **characterised in that** said parts (3, 4) are movable with respect to each other, at least at the location of the recess (10), in a clamping direction (P3, P4) transversely to the direction of movement (P1), which clamping direction (P3, P4) extends substantially parallel to the main surface of the elongated plate-shaped element (5), whilst the device (1) comprises at least one tapered element (26, 27), which abuts against at least one of said parts (3, 4), which tapered element is movable in a direction (P2) transversely to the clamping direction (P3, P4) for moving said parts (3, 4) with respect to each other.

2. A device (1) according to claim 1, **characterised in that** one part is provided with a passage (16), in which the tapered element is at least partially accommodated, which passage (16) is partially bounded by a flange (17) that is pivotable about a pivot axis (18).

3. A device (1) according to claim 2, **characterised in that** the flange (17) abuts against an inner side of the holder (2) on a side remote from the passage (16).

4. A device (1) according to claim 1, **characterised in that** said parts (43,44) bound a passage, in which the tapered element is at least partially accommodated.

5. A device (1) according to claim 2, 3 or 4, **characterised in that** an element abutting against at least one part is provided on a side of the passage remote from the tapered element (26,27), which element is connected to the tapered element via a rod (23,24) provided with screw thread.

6. A device (1) according to any one of the preceding claims, **characterised in that** the elongated plate-shaped etement (5) as well as the recess (10) in the guide are arcuate in shape.

## Patentansprüche

1. Vorrichtung (1) mit einem Halter (2), einer in dem Halter (2) befindlichen Führung und einem relativ zu der Führung beweglichen Element (5), wobei die Führung zwei Teile (3, 4), die einander gegenüberliegend in dem Halter (2) angeordnet sind, und eine von den Teilen begrenzte Ausnehmung (10) umfasst, in der das bewegliche Element aufgenommen ist, das in einer Bewegungsrichtung darin bewegbar ist, **dadurch gekennzeichnet, dass** die Teile (3, 4) zumindest an der Stelle der Ausnehmung (10) in einer Klemmrichtung (P3, P4) quer zur Bewegungsrichtung (P1) zueinander beweglich sind, wobei die Klemmrichtung (P3, P4) im wesentlichen parallel zur Hauptoberfläche des länglichen, plattenförmigen Elements (5) verläuft, während die Vorrichtung (1) wenigstens ein kegeliges Element (26, 27) umfasst, das an wenigstens einem der Teile (3, 4) anliegt, wobei das kegelige Element in einer Richtung (P2) quer zur Klemmrichtung (P3, P4) beweglich ist, um die Teile (3, 4) relativ zueinander zu bewegen.

2. Vorrichtung (1) nach Anspruch 1, **dadurch gekennzeichnet, dass** ein Teil mit einem Durchgang (16) versehen ist, in dem das kegelige Element zumindest teilweise aufgenommen ist, wobei der Durchgang (16) teilweise von einem Flansch (17) begrenzt ist, der um eine Schwenkachse (18) schwenkbar ist.

3. Vorrichtung (1) nach Anspruch 2, **dadurch gekennzeichnet, dass** der Flansch (17) auf einer vom Durchgang (16) entfernten Seite an eine Innenseite des Halters (2) angrenzt.

4. Vorrichtung (1) nach Anspruch 1, **dadurch gekennzeichnet, dass** die Teile (43, 44) einen Durchgang begrenzen, in dem das kegelige Element zumindest teilweise aufgenommen ist.

5. Vorrichtung (1) nach Anspruch 2, 3 oder 4, **dadurch gekennzeichnet, dass** ein an wenigstens einem Teil anliegendes Element auf einer von dem kegeligen Element (26, 27) entfernten Seite des Durchgangs vorgesehen ist, wobei das Element über einen mit Schraubengewinde versehenen Stab (23, 24) mit dem kegeligen Element verbunden ist.

6. Vorrichtung (1) nach einem der vorhergehenden Ansprüche, **dadurch gekennzeichnet, dass** das längliche, plattenförmige Element (5) sowie die Ausnehmung (10) in der Führung bogenförmig sind.

## Revendications

1. Dispositif (1) comprenant un organe de retenue (2), un guidage situé à l'intérieur dudit organe de retenue (2) et un élément (5) qui est mobile par rapport audit guidage, lequel guidage comprend deux parties (3, 4) positionnées l'une en face de l'autre dans ledit organe de retenue (2) et un évidement (10) borné par lesdites parties, dans lequel l'élément mobile est logé, mobile dans une direction de mouvement dans celui-ci, **caractérisé en ce que** lesdites parties (3, 4) sont mobiles l'une par rapport à l'autre, au moins dans l'emplacement de l'évidement (10), dans une direction de serrage (P3, P4) transversalement à la direction de mouvement (P1), laquelle direction de serrage (P3, P4) s'étend de façon sensiblement parallèle à la surface principale de l'élément en forme de plaque oblong (5), alors que le dispositif (1) comprend au moins un élément tronconique (26, 27), qui prend appui contre au moins une desdites parties (3, 4), lequel élément tronconique est mobile dans une direction (P2) transversale à la direction de serrage (P3, P4) pour déplacer lesdites parties (3, 4) l'une par rapport à l'autre.

2. Dispositif (1) selon la revendication 1, **caractérisé en ce qu'**une partie est pourvue d'un passage (16), dans lequel l'élément tronconique est au moins partiellement logé, lequel passage (16) est partiellement borné par une bride (17) qui pivote autour d'un axe de pivotement (18).

3. Dispositif (1) selon la revendication 2, **caractérisé en ce que** la bride (17) prend appui contre un côté intérieur de l'organe de retenue (2) sur un côté éloigné du passage (16).

4. Dispositif (1) selon la revendication 1, **caractérisé en ce que** lesdites parties (43, 44) bornent un passage, dans lequel l'élément tronconique est au moins partiellement logé.

5. Dispositif (1) selon la revendication 2, 3 ou 4, **caractérisé en ce qu'**un élément prenant appui contre au moins une partie est prévu sur un côté du passage éloigné de l'élément tronconique (26, 27), lequel élément est relié à l'élément tronconique par l'intermédiaire d'une tige (23, 24) pourvue d'un filetage de vis.

6. Dispositif (1) selon une quelconque des revendications précédentes, **caractérisé en ce que** l'élément en forme de plaque oblongue (5) ainsi que l'évidement (10) dans le guidage sont de forme arquée.
